# EUROPÄISCHE PATENTSCHRIFT

(11) **EP 2 899 158 B1**
(45) Veröffentlichungstag und Bekanntmachung des Hinweises auf die Patenterteilung: **16.11.2016**
(21) Anmeldenummer: 14152561.8
(22) Anmeldetag: 24.01.2014
(51) Int. Cl.: C01B 31/00, C01B 31/02, H01M 4/00, H01M 10/00

(54) **PORÖSE KOHLENSTOFFTEILCHEN MIT KERN-HÜLLE-STRUKTUR SOWIE VERFAHREN ZUR HERSTELLUNG DERSELBEN**
POROUS CARBON PARTICLES WITH CORE-SHELL-STRUCTURE AND METHOD FOR THE PRODUCTION THEREOF
PARTICULES DE CARBONE POREUSES AVEC UNE STRUCTURE NOYAU-ENVELOPPE ET LEUR PROCÉDÉ DE FABRICATION

(43) Veröffentlichungstag der Anmeldung: 29.07.2015
(73) Patentinhaber: Heraeus Quarzglas GmbH & Co. KG, 63450 Hanau (DE)
(72) Erfinder: Neumann, Christian, 35410 Hungen (DE); Otter, Matthias, 63739 Aschaffenburg (DE); Becker, Jörg, 61194 Niddatal (DE); Pihan, Sascha, 63743 Aschaffenburg (DE)
(74) Vertreter: Staudt, Armin Walter

(56) Entgegenhaltungen:
- WO-A1-2012/136513
- US-B1- 6 355 377
- Marek Eder ET AL: "Thermal Decomposition of Petroleum and Coal Tar Pitches by Thermogravimetry", Die Angewandte Makromolekulare Chemie, 1. Januar 1986 (1986-01-01), Seiten 91-1, XP055120082, Gefunden im Internet: URL:http://onlinelibrary.wiley.com/doi/10. 1002/apmc.1986.051380107/pdf [gefunden am 2014-05-26]
- Segaula Isaac Manabile: "Study of the early stages of carbonisation of some pitch materials of different composition", , 31. Juli 2009 (2009-07-31), Seiten 1-104, XP055120338, Pretoria Gefunden im Internet: URL:http://upetd.up.ac.za/thesis/available /etd-11292009-204923/ [gefunden am 2014-05-27]
- YU LEI ET AL: "Porous mesocarbon microbeads with graphitic shells: constructing a high-rate, high-capacity cathode for hybrid supercapacitor", SCIENTIFIC REPORTS, Bd. 3, 21. August 2013 (2013-08-21), XP055120127, DOI: 10.1038/srep02477
- CHANG SONG ET AL: "Hierarchical Porous Core-Shell Carbon Nanoparticles", CHEMISTRY OF MATERIALS, Bd. 21, Nr. 8, 28. April 2009 (2009-04-28) , Seiten 1524-1530, XP055120156, ISSN: 0897-4756, DOI: 10.1021/cm802852e

## Beschreibung

### Technisches Gebiet

Die vorliegende Erfindung betrifft poröse Kohlenstoffteilchen mit Kern-Hülle-Struktur, aufweisend d einen Kern aus einer ersten Kohlenstoffvarietät mit einer ersten Porosität und einer den Kern umgebenden Hülle aus einer zweiten Kohlenstoffvarietät aus graphitähnlichem Kohlenstoff mit einer zweiten Porosität, die geringer ist als die erste Porosität.

Weiterhin betrifft die Erfindung ein Verfahren zur Herstellung eines porösen Kohlenstofferzeugnisses mit Kern-Hülle-Struktur, umfassend folgende Verfahrensschritte:
(a) Bereitstellen eines Poren enthaltenden Templatmaterials aus anorganischem Werkstoff,
(b) Infiltrieren der Poren des Templatmaterials mit einer ersten Vorstufe für Kohlenstoff einer ersten Varietät,
(c) Carbonisieren der ersten Vorstufe, so dass in den Poren eine erste Ablagerung aus dem Kohlenstoff der ersten Varietät mit einer ersten Porosität gebildet wird,
(d) Infiltrieren von nach dem Carbonisieren verbleibender Poren mit einer zweiten Vorstufe für Kohlenstoff einer zweiten Varietät,
(e) Carbonisieren der zweiten Vorstufe, wobei eine zweite Ablagerung aus graphitähnlichem aus dem Kohlenstoff der zweiten Varietät mit einer zweiten Porosität gebildet wird, die geringer ist als die erste Porosität, und
(f) Entfernen des Templatmaterials.

Im Zuge der Weiterentwicklung tragbarer Elektronikgeräte steigt die Nachfrage nach wiederaufladbaren Batterien ("Akkumulatoren" oder "Sekundärbatterien"). Grundlegende Anforderungen sind eine hohe Zellspannung, hohe Ladekapazität bei möglichst niedrigem Äquivalenzgewicht. Außerdem wird eine hohe Zyklenlebensdauer, also ein geringer Ladungsverlust beim Auf- und Entladen gefordert.

### Stand der Technik

In jüngster Zeit haben Lithium-Sekundärbatterien an technischer Bedeutung gewonnen. Bei diesen sind eine Kathode (positive Elektrode) und eine Anode (negative Elektrode) aus einem Material vorgesehen, das zur Einlagerung und Auslagerung (Interkalation und Deinterkalation) von Lithiumionen geeignet ist, und das an einen Elektrolyten angrenzt, der die Bewegung der Lithiumionen zulässt. Als Anodenmaterial sind poröse Kohlenstoffstrukturen im Einsatz, die Lithiumionen reversibel aufnehmen und abgeben können, ohne dass sich seine strukturellen und elektrischen Eigenschaften wesentlich ändern.

Daneben sind Lithium-Schwefel-Sekundärbatterien in der Entwicklung und gelten als eine der viel versprechenden Sekundärbatterien der nächsten Generation. In ihrer einfachsten Konfiguration besteht die Zelle aus einer positiven Elektrode aus Schwefel und einer negativen Elektrode aus Lithium. Die theoretische Kapazität - unter der Annahme, dass alle Schwefelatome bei der Entladung einer Elektrode vollständig zu S²⁻ reduziert werden - beträgt 1.675 mAh/g und die Nennspannung liegt bei 2,2 V/Zelle. Die an der Reaktion beteiligte Komponente Schwefel (oder schwefelhaltige organische Verbindungen) wirkt als elektrischer Isolator, so dass der Ablauf einer elektrochemischen Reaktion einen andauernden innigen Kontakt mit einer elektrisch gut leitfähigen Komponente - wie etwa Kohlenstoff - erfordert.

Um eine elektrische oder ionische Leitung der Elektroden zu gewährleisten, werden flüssige Elektrolyte - häufig polare organische Lösungsmittel - eingesetzt. Diese dienen nicht nur als Ionentransportmedien zwischen Anode und Kathode, sondern auch als Ionenleiter innerhalb einer schwefelhaltigen Elektrode.

Dadurch ergibt sich zu einen die Problematik, dass die Elektrodenstruktur eine große, mit elektrochemischen Aktivmaterial belegte Oberfläche bereitstellen und einen ungehinderten Zutritt der Elektrolyt-Flüssigkeit zum Aktivmaterial ermöglichen soll. Diese Erfordernisse können durch eine so genannte hierarchisch strukturierte Porosität des Elektrodenwerkstoffs erfüllt werden, wobei große Oberflächen durch Poren im Nanometerbereich bereitgestellt werden, die über ein durchgängiges makroporöses Transportsystem für den Elektrolyten zugänglich sind.

Zum anderen kann sich Aktivmaterial, wie etwa Sulfid- und Polysulfid-Entladeprodukte, in dem Elektrolyten lösen und von diesem ausgetragen werden. Die von der Elektrode wegdiffundierten Komponenten sind für die weitere elektrochemische Reaktion in der Regel nicht mehr verfügbar, wodurch die Ladekapazität sinkt. Es ist auch möglich, dass Entladungsprodukte irreversibel aus der Elektrolytlösung ausfallen, wodurch die Ladekapazität ebenfalls sinkt.

Diese nachteiligen Effekte vermeidet eine Elektrode, die poröse Kohlenstoffteilchen mit Kern-Hülle-Struktur gemäß der eingangs genannten Gattung enthält und wie sie aus der WO 2012/136513 A1 bekannt sind. Das bekannte poröse Kohlenstoffteilchen umfasst eine Innenschicht aus einer ersten Kohlenstoffvarietät, die an einen Hohlraum angrenzt und die in Kontakt mit einer Außenschicht aus einer zweiten Kohlenstoffvarietät ist, wobei die Innenschicht aus nicht-graphitischem Kohlenstoff besteht und eine höhere Porosität als die Außenschicht aufweist.

Für deren Herstellung wird ein porenhaltiges Templatmaterial in Form eines durch Gasphasenabscheidung erzeugten SiO₂-Rußes (SiO₂-Soot) eingesetzt. In den Poren des SiO₂-Templatmaterials werden anhand eines zweistufigen Infiltrationsprozess nacheinander zwei Kohlenstoff-Varietäten abgeschieden, die sich in ihrer Porosität voneinander unterscheiden. In der ersten Infiltrationsstufe werden die Poren mit einer Kohlenstoff-Vorstufe in Form einer Kohlenhydratlösung - wie etwa ein Zucker-Wasser-Lösung - infiltriert, die nach dem Carbonisieren Kohlenstoff nicht-graphitischen Kohlenstoff mit hoher Porosität ergibt. Das nach dem Carbonisieren der ersten Kohlenstoff-Vorstufe (C-Vorstufe) verbliebene oder frei gewordene Porenvolumen wird in der zweiten Infiltrationsstufe homogen mit einer anderen Kohlenstoff-Vorstufe - wie etwa flüssigem Pech - infiltriert, die nach dem Carbonisieren graphitähnlichen Kohlenstoff mit einer Porosität ergibt, die geringer ist als die Porosität des nicht-graphitischen Kohlenstoffs. Unter "Vorstufe" oder "C-Vorstufe" wird hierbei eine kohlenstoffhaltige Verbindung verstanden, die als Ablagerung auf einem Substrat abgeschieden und durch Carbonisieren in Kohlenstoff ungewandelt werden kann.

Nach dem Entfernen des Templatmaterials wird eine Kohlenstoffstruktur mit hierarchischer Porosität erhalten. Das entfernte Templatmaterial hinterlässt Hohlräume im Mesoporen- und Makroporenbereich, die über die ehemaligen Sinterhälse dreidimensional miteinander vernetzt sind. Mesoporen haben typischerweise eine Porengröße im Bereich von 2 bis 50 nm. Die diesen vernetzten Hohlraum umgebende Kohlenstoffstruktur besteht aus einer mehrschichtigen Kohlenstoffschicht. Die dem Hohlraum zugewandte Innenschicht besteht aus vorwiegend nicht-graphitischem Kohlenstoff mit hoher Mikroporosität. Der niedrigporöse Kohlenstoff der Außenschicht vermindert die Mikroporosität und die spezifische Oberfläche des Verbundmaterials insgesamt, ohne die Zugänglichkeit eines flüssigen Elektrolyten zum hochporösen, turbostratischen Kohlenstoff der Innenschicht zu verhindern. Diese Struktur des Kohlenstoffgerüstes kann als "Kern-Hülle-Struktur" bezeichnet werden. Sie ist zur Rückhaltung von Elektrodenmaterial geeignet.

Marek Eder et al. -"Thermal Decomposition of Petroleum and Coal Tar Pitches by Thermogravimetry"; in: Die Angewandte Makromolekulare Chemie, 1. Januar 1986, Seiten 91-101 - befasst sich mit einer thermogravimetrischen Untersuchung von Steinkohlenteeren und Petrolpech in Luft und in Stickstoff. Für jede Zersetzungsstufe werden die Reaktionsordnung und die Aktivierungsenergie bestimmt. Daraus ergeben sich Daten zum Gewichtsverlust der unterschiedlichen Peche.

Die Abschlussarbeit zum Master of Science von Segaula Isaac Manabile: -"Study of the early stages of carbonisation of some pitch materials of different composition", 31. Juli 2009, Seiten 1-104, University of Pretoria - befasst sich mit Entstehung und Entwicklung der Mesophase bei unterschiedlichen Pechmodifikationen.

Ergebnisse von FT-IR-Untersuchungen und thermogravimetrischen Messungen werden berichtet.]

Yu Lei et al. - "Porous mesocarbon microbeads with graphitic shells: constructing a high-rate, high-capacity cathode for hybrid supercapacitor", in: SCIENTIFIC REPORTS, Bd. 3, 21. August 2013 - beschreibt ein poröses Kohlenstofferzeugnis mit Kern-Hülle-Struktur (core-shell), das aus Mesocarbon-Mikrokugeln (mesorcarbon microbeads - MCMB) erzeugt wird. Der Kern besteht aus amorphem, porösem Kohlenstoff und die Hülle besteht aus graphitischem Kohlenstoff.

Aus Chang Song et al. - "Hierarchical Porous Core-Shell Carbon Nanoparticles", Chemistry of Materials, Bd. 21, Nr. 8, 28. April 2009, Seiten 1524-1530 - sind Kohlenstoff-Nanopartikel aus einem mesoporösen Kern und einer mikroporösen Hülle bekannt. Die mesoporösen Wände bestehen aus wenigen Graphen-Lagen, die nach dem Entfernen hohle Kohlenstoff-Nanopartikel hinterlassen.

US 6,355,377 B1 offenbart ein Negativ-Aktiv-Material für wiederaufladbare Lithium-Batterien, die aus einem Kern aus kristallinem Kohlenstoff und einer Hülle aus halb-kristallinem Kohlenstoff (semi-crystalline carbon) bestehen, wobei die Hülle Metallboride und Metallcarbide umschließt und eine turbostratische Schicht aufweist.

### Technische Aufgabenstellung

Bei dem aus WO 2012/136513 A1 bekannten Verfahren wird die auf dem Templatmaterial abgeschiedene lösungsmittelhaltige Rohrzuckerlage getrocknet und durch Erhitzen in Stickstoff bei 700 °C carbonisiert. Durch das Verdampfen des Wassers und das Carbonisieren verliert sie bis zu 75 % ihrer ursprünglichen Masse. Daher ergibt der Infiltrationsprozess grundsätzlich eine geringe Stärke im Bereich weniger Nanometer für die abgelagerte turbostratische Kohlenstoffschicht. Mindestens 50% des verbleibenden Porenvolumens sind mit Kohlenstoff der zweiten Varietät belegt.

Es hat sich gezeigt, dass bei dem bekannten Kohlenstoffteilchen die Porosität des turbostatischen Kohlenstoffs der Innenschicht, die durch Mikroporen mit Porengrößen im Bereich von weniger als 2 nm gekennzeichnet ist und die Masseverteilung der Kohlenstoff-Varietäten innerhalb der Kohlenstoffstruktur hinsichtlich Rückhaltevermögen für Aktivmaterial und Ladekapazität der daraus erzeugten Batterie nicht optimal sind.

Der Erfindung liegt daher die Aufgabe zugrunde, poröse Kohlenstoffteilchen mit Kern-Hülle-Struktur und hierarchischer Porosität bereitzustellen, die ein hohes Rückhaltevermögen für Aktivmaterial aufweisen, und die sich das sich beim Einsatz als Elektrodenmaterial für eine Lithium- oder eine Lithium-Schwefel- Sekundärbatterie durch hohe Kapazität und einen geringen Kapazitätsverlust auszeichnen.

Außerdem liegt der Erfindung die Aufgabe zugrunde ein Verfahren zur kostengünstigen Herstellung derartiger Kohlenstoffteilchen anzugeben.

### Allgemeine Darstellung der Erfindung

Hinsichtlich des Verfahrens wird diese Aufgabe ausgehend von dem eingangs genannten Verfahren mit den Verfahrensschritten (a) bis (f) erfindungsgemäß durch eine Verfahrensmodifikation mit folgenden Maßnahmen gelöst:
(A) das Templatmaterial wird in Form von Templat-Partikeln und die erste Vorstufe wird in Form von Vorstufen-Partikeln erster Art aus schmelzbarem und polymerisierbarem Werkstoff bereitgestellt, wobei zum Infiltrieren gemäß Verfahrensschritt (b) eine Partikelmischung enthaltend Templat-Partikel und Vorstufen-Partikel erster Art erschmolzen wird und dabei Schmelze der ersten Vorstufe in die Poren der Templat-Partikel eindringt und darin vor oder beim Carbonisieren gemäß Verfahrensschritt (c) unter Polykondensation zu einem porenhaltigen Kohlenstoffschaum aufschäumt, so dass ein Zwischenprodukt erhalten wird, bei dem Poren des Templatmaterials mindestens teilweise mit einem Kohlenstoffschaum gefüllt sind und
(B) das Zwischenprodukt wird zu Zwischenprodukt-Partikeln zermahlen und die zweite Vorstufe für den Kohlenstoff der zweiten Varietät wird in Form von Vorstufen-Partikeln zweiter Art aus schmelzbarem Werkstoff bereitgestellt, wobei zum Infiltrieren gemäß Verfahrensschritt (d) eine Partikelmischung enthaltend Zwischenprodukt-Partikel und Vorstufen-Partikel zweiter Art erschmolzen wird und dabei Schmelze der zweiten Vorstufe in Poren des Kohlenstoffschaums eindringt und diese nach dem Carbonisieren gemäß Verfahrensschritt (e) als Hülle aus graphitähnlichem Kohlenstoff der Kern-Hülle-Struktur mindestens teilweise verschließt.

Beim erfindungsgemäßen Verfahren wird - wie beim gattungsgemäßen Verfahren - vorzugsweise von einem Templatmaterial aus porösem anorganischem Werkstoff mit hierarchischer Materialverteilung ausgegangen. Diese Materialverteilung wird beispielsweise über einen Prozess der Gasphasenabscheidung erzeugt, wie in der WO 2012/136513 A1 erläutert. Die bei der Gasphasenabscheidung entstehenden Primärpartikel lagern sich auf ihrem Weg zur Ablagerungsfläche zu Nanoteilchen unterschiedlicher Größe zusammen, die wiederum durch Aggregation oder Agglomeration größere, mehr oder weniger sphärische Einheiten bilden. Typischerweise sind diese sphärischen Einheiten in einem Sootkörper (oder Rußkörper) versintert und über sogenannte "Sinterhälse" miteinander verbunden. Die einzelnen Teilchen des Templatmaterials werden aus dem Sootkörper erzeugt und verfügen somit über ein poröses, zusammenhängendes Gerüst. Dieses, aus dem Stand der Technik hinreichend bekannte Templatmaterial wird einem mehrstufigen Infiltrationsprozess unterzogen, bei dem gegenüber dem bekannten Verfahren folgende Verfahrensänderungen vorgesehen sind.
1. Vorab werden Pulver sowohl aus dem porösen Templatmaterial als auch aus der ersten C-Vorstufe erzeugt. Diese Pulver werden miteinander vermischt und die homogene Pulvermischung wird so hoch erhitzt, dass die Partikel der C-Vorstufe niedrigviskos werden und die niedrigviskose Masse in die Poren des Templats eindringen kann und diese möglichst homogen füllt. Auf ein flüssiges Lösungsmittel für das Infiltrieren der ersten C-Vorstufe wird dabei verzichtet. Als erste Vorstufe für nicht-graphitisierbaren, turbostratischen Kohlenstoff sind beispielsweise organische Kohlenstoffverbindungen geeignet die bei Erhitzen polymerisieren, wie beispielsweise Saccharose, Fructose oder Glucose. Häufig ist derartigen polymerisierbaren C-Vorstufen keine diskrete Schmelztemperatur zuzuordnen, sondern ein Schmelzbereich. Ist das niedrigviskose C-Vorstufenmaterial in engem Kontakt mit dem Templatmaterial, so kann es in die Poren desselben eindringen und diese mindestens teilweise auffüllen. Dabei bilden die erste C-Vorstufe oder deren mögliche anfängliche Zersetzungsprodukte eine Ablagerung an den Wandungen der infiltrierten Poren.
   Beim weiteren Erhitzen erfolgt ein möglichst gleichmäßiges Aufschäumen des abgelagerten Schichtmaterials vor dem endgültigen Carbonisieren. Die Schaumbildung beruht auf Abspaltung funktioneller Gruppen bei der Polymerisation der ersten C-Vorstufe, die gasförmige Komponenten bilden, wie etwa Wasser und Kohlendioxid. Durch die Schaumbildung vergrößert sich das Volumen der Ablagerung beträchtlich, so dass der vorhandene Porenraum nach nur einer einzigen Infiltration weitgehend, im Idealfall vollständig mit kohlenstoffhaltigem Schaum aufgefüllt wird. Die Poren des Schaums sind im Wesentlichen Meso- und Makroporen mit Porengrößen von mehr als 2 nm.
   Damit die sich bei der Schaumbildung bildenden Poren die besonders gewünschten Mesoporen sind, ist eine Begrenzung des Blasenwachstums bei der Schaumbildung hilfreich. Die Blasenwachstums-Begrenzung beruht beim erfindungsgemäßen Verfahren im Wesentlichen auf einer räumlichen Einengung der Schaumbildung. Diese ergibt sich durch die Größe der Poren des Templatmaterials und die Menge der in die Poren in einem Infiltrationsvorgang eingebrachten C-Vorstufe. Die mittlere Porengröße des Templatmaterials liegt typischerweise um 400 nm bis etwa 1000 nm; die Menge an erster C-Vorstufe ist im Vergleich zu einem lösungsmittelbasierten Verfahren vergleichsweise groß.
   Das Carbonisieren des Schaums erfolgt durch Aufheizen auf eine Temperatur von typischerweise mehr als 500 °C. Dabei wird der Schaum in nicht-graphitisierbaren, turbostratischen Kohlenstoff mit Mesoporen, aber auch Makroporen umgesetzt. Beim Carbonisieren schrumpft das Volumen dieser Ablagerung geringfügig, so dass eine im Wesentlichen gefüllte Porenstruktur verbleibt, die den Kern der Kern-Hülle-Struktur des Kohlenstoffteilchens bildet. Diese dreidimensionale Morphologie des carbonisierten, turbostratischen Kohlenstoffs wird im Folgenden auch als "Kohlenstoffschaum" - bestehend aus "Kohlenstoffschaum-Poren" - bezeichnet. Sie unterscheidet sich deutlich von der bekannten, durch lösungsmittelbasierte Abscheidung erzeugten, im Wesentlichen schichtförmigen Kohlenstoff-Ablagerung.
   Im Gegensatz zu Graphit mit kristallographischer Fernordnung von Graphenschichten ist das Schichtgefüge in turbostratischem Kohlenstoff mehr oder weniger fehlgeordnet. Kohlenstoff mit turbostratischem Schichtgefüge ist durch Erhitzen nicht graphitisierbar und wird hier auch als "nicht graphitisierbarer Kohlenstoff" bezeichnet.
2. Das so erhaltene Zwischenprodukt ist ein mit Kohlenstoffschaum durchsetztes Templatmaterial. Es fällt in der Regel als agglomerierte Masse an, in der die Körner über oberflächliche Kohlenstoffanhaftungen verbunden sind. Erfindungsgemäß wird es zu Zwischenprodukt-Partikeln zermahlen.
   Das Zermahlen des Zwischenprodukts kann neue Oberfläche erzeugen und erfolgt daher möglichst schonend. Es führt zu Zwischen-Produktpartikeln mit Partikelgrößen, die im Wesentlichen der gewünschten Endgröße der Kohlenstoffteilchen entsprechen. Das Zwischenprodukt wird beispielsweise zu Zwischenprodukt-Partikeln mit Partikelgrößen im Bereich von 5 bis 100 µm zermahlen, wobei vorzugsweise Partikelgrößen im Bereich von 25 bis 75 µm erzeugt werden.
   Das Zermahlen erfolgt vorab oder gleichzeitig mit dem Mischen mit Vorstufen-Partikeln der zweiten Art. Ziel ist eine homogene Pulvermischung aus den Zwischenprodukt-Partikeln und den Vorstufen-Partikeln der zweiten Art.
3. Die homogene Pulvermischung aus Zwischenprodukt-Partikeln und Vorstufen-Partikeln der zweiten Art wird erhitzt. Die Partikel der zweiten C-Vorstufe bilden eine niedrigviskose Masse, die die Zwischenprodukt-Partikel als dünne Außenhaut bedeckt, dabei auch in offene Poren des porösen Kernmaterials eindringt und diese dadurch nach außen vollständig oder zum Teil verschließt. Diese Wirkung ist erwünscht, und dafür genügt eine vergleichsweise geringe Menge an Vorstufenmaterial der zweiten Art. Diese Art der Infiltration, bei der das Volumen der zu infiltrierenden Substanz (nämlich der zweiten C-Vorstufe) nicht genügt, um den vorhandenen Porenraum vollständig aufzufüllen, kann auch als "inhomogene Infiltration" bezeichnet werden.

Das Carbonisieren der Außenhaut erfolgt wie üblich durch Aufheizen auf ausreichend hohe Temperatur unter sauerstoffarmer Atmosphäre. Dabei wird die Außenhaut in grafitähnlichen Kohlenstoff mit vergleichsweise geringer Porosität umgesetzt und bildet die Hülle der Kern-Hülle-Struktur der herzustellenden Kohlenstoffteilchen.

Graphitisierbarer Kohlenstoff der zweiten Kohlenstoff-Varietät ist vergleichsweise dicht und erfährt beim Carbonisieren eine merkliche Umlagerung von Graphenschichten in Richtung auf eine Graphitstruktur und wird in der Literatur auch als "soft carbon" bezeichnet. Durch das Entfernen des Templatmaterials, wie beispielsweise durch chemische Auflösung, wird das vorher von sphärischen Nanoteilchen und deren Aggregaten/Agglomeraten besetzte Volumen frei und stellt danach Hohlräume dar, die über ehemalige - nun geöffnete - Sinterhälse dreidimensional miteinander vernetzt sind. Diese Hohlräume werden im Folgenden auch als Extemplat-Poren bezeichnet und haben typischerweise mittlere Größen im Bereich von 100 bis 1.000 nm, wobei die Verbindungskanäle über die ehemaligen Sinterhälse deutlich kleiner sein können (< 50 nm).

Der Kern der so erzeugten Kohlenstoffteilchen verfügt über ein großes Porenvolumen. Das ehemalige Templatmaterial ist vollständig in Hohlräume umgewandelt (im Folgenden als "Extemplat-Poren" bezeichnet), und die ursprünglichen Poren des Templatmaterials sind zum großen Teil mit porösem Kohlenstoffschaum gefüllt (also mit Kohlenstoffschaum-Poren). Beide Porenarten stellen eine große freie Oberfläche im Kern der Kohlenstoffteilchen zur Verfügung. Die Kohlenstoffteilchen sind nach außen von einer Hülle aus grafitähnlichem Kohlenstoff geringer Porosität mehr oder weniger vollständig umgeben und dadurch der hochporöse Kernbereich mindestens teilweise abgeschlossen. Das graphitähnliche Schichtgefüge der Hülle zeigt darüber hinaus eine höhere elektrische Leitfähigkeit als der hochporöse Kern.

Beim Einsatz der so erzeugten Kohlenstoffpartikel als Elektrodenwerkstoff stellen die über relativ enge Kanäle (ehemalige Sinterhälse) dreidimensional miteinander vernetzten Extemplat-Poren und die Kohlenstoffschaum-Poren ein großes Porenvolumen zur Verfügung, das zur Aufnahme und Fixierung von elektrolytischem Aktivmaterial wie etwa Schwefel oder Schwefelverbindungen und -komplexen eines Lithium-Schwefel-Akkumulators geeignet ist. Die diesen porenreichen Bereich nach außen abschließende Hülle weist dagegen überwiegend kleinere Poren im Bereich von 20 - 250 nm auf. Der niedrigporöse Kohlenstoff der Hülle vermindert die Durchlässigkeit für das Aktivmaterial und wirkt so einem Auswaschen von Aktivmaterial aus den Hohlräumen entgegen, jedoch ohne die Zugänglichkeit eines flüssigen Elektrolyten zum hochporösen Kern zu verhindern.

Der Kern des so erzeugten Kohlenstoffteilchens zeichnet sich somit durch hohe Porosität mit großem Aufnahmevolumen für Aktivmaterial aus und ermöglicht eine hohe Ladekapazität, während die Hülle auch bei geringer Dicke für Aktivmaterial weniger undurchlässig ist, jedoch einen elektrolytischen Zugang zu dem Kern ermöglicht und so für ein hohes Rückhaltevermögen und einen geringen Kapazitätsverlust sorgt.

Die relativ dichte Hülle erfüllt die Funktion hinsichtlich des Rückhaltevermögens bereits bei einer geringen mittleren Dicke von beispielsweise maximal 5 µm. Infolge der "inhomogenen Infiltration" sind nur die oberflächennahe Poren der Kohlenstoffteilchen verschlossen. Größere Dicken gehen auf Kosten des verfügbaren inneren Porenvolumens und damit der Speicherkapazität. Insbesondere im Hinblick auf die mechanische Stabilität des Kohlenstoffgerüstes und eine hohe elektrische Leitfähigkeit liegt die mittlere Schichtdicke aber bei mindestens 500 nm.

Aus diesen Gründen wird die "inhomogene Infiltration" so geführt, dass beim Infiltrieren gemäß Verfahrensschritt (d) die Menge von Kohlenstoff der zweiten Varietät so niedrig eingestellt wird, dass die Poren des Kohlenstoffschaums im Mittel zu maximal 30%, vorzugsweise zu maximal 10 % gefüllt sind.

Als Vorstufe für den hochporösen Kohlenstoff sind grundsätzlich schmelzbare organische Kohlenstoffverbindungen mit einem gewissen Anteil an abspaltbarem Kondensat geeignet. Dazugehören auch Peche, sofern diese durch Polykondensation zersetzbar sind, wie etwa Petroleumpech. Vorzugsweise wird zum Infiltrieren gemäß Verfahrensschritt (b) jedoch ein Kohlenhydrat als erste Vorstufe eingesetzt das mindestens 30 %, vorzugsweise mindestens 50 % ihrer Ausgangsmasse vor der Polykondensationsreaktion als Gas abspaltet.

Je größer das abgespaltene Gasvolumen ist, umso höher ist die Porosität des Kerns nach dem Carbonisieren. Kohlenhydrate, insbesondere Zucker, wie Saccharose, Fructose oder Glucose, sind schmelzbar und haben einen hohen Wasseranteil, der bei der Polymerisation als Reaktionsprodukt entsteht und zur Blasenbildung beiträgt. Sie stellen nicht-graphitisierbare C-Vorstufen dar, die sich nach dem Carbonisieren durch eine hohe spezifische Oberfläche auszeichnen.

Es hat sich als günstig erwiesen, wenn der Kern nach dem Carbonisieren eine spezifische Oberfläche nach BET im Bereich von 400 bis 600 m²/g, und die Hülle eine spezifische Oberfläche nach BET im Bereich von weniger als 50 m²/g aufweisen.

Diese Angaben beziehen sich beim Kernmaterial auf beidseitig freie, weder von Hüllmaterial noch vom Templatmaterial belegte Oberflächen, und bei der Hülle ebenfalls auf beidseitig freie, nicht belegt Oberflächen. Die spezifische Oberfläche wird nach der DIN ISO 9277- Mai 2003 (Bestimmung der spezifischen Oberfläche von Feststoffen durch Gasadsorption nach dem BET-Verfahren) ermittelt.

Die hohe spezifische Oberfläche und das große Porenvolumen des Kerns fördern die Aufnahmekapazität von Aktivmaterial, wohingegen die niedrige spezifische Oberfläche der Hülle deren Rückhaltevermögen charakterisiert und außerdem eine möglichst hohe elektrische Leitfähigkeit des Kohlenstoffteilchens insgesamt gewährleistet.

Vorzugsweise enthält der Kern Makroporen im Größenbereich von 250 bis 10.000 nm, die ein spezifisches Volumen von mindestens 1,0 cm³/g, vorzugsweise mindestens 2 cm³/g einnehmen.

Makroporen haben laut Definition mittlere Porengrößen (definiert als Abstand gegenüberliegender Porenwandungen) von mehr als 50 nm. Ein hoher Anteil relativ großer Makroporen im Kernmaterial im Größenbereich von 250 bis 10.000 trägt zur Aufnahmekapazität für Aktivmaterial und zum Rückhaltevermögen bei. Im Hinblick auf die elektrische Leitfähigkeit und die mechanische Stabilität der Kohlenstoffstruktur liegt der Volumenanteil an Makroporen im Kern jedoch bei maximal 5 cm³/g.

Demgegenüber ist der Volumenanteil an Meso- und insbesondere von Makroporen in der Hülle gering, denn sie beeinträchtigen deren Funktion als dichte "Hülle" und ihren Beitrag zur elektrischen Leitfähigkeit der Kohlenstoffstruktur, insbesondere auch bereits bei geringen Schichtdicken.

Im Hinblick darauf wird eine Verfahrensweise bevorzugt, bei der eine Hülle erzeugt wird, in der Poren mit Porengrößen im Bereich von 20 bis 250 nm einen Volumenanteil von maximal 0,8 cm³/g, vorzugsweise maximal 0,5 cm³/g einnehmen.

Um dies zu erreichen, hat es sich bewährt, zum Infiltrieren gemäß Verfahrensschritt (d) eine zweite Vorstufe für graphitisierbaren Kohlenstoff einzusetzen, insbesondere Pech.

Pech ist ein kohlenstoffhaltiges Material, das teilweise eine geordnete flüssigkristalline Struktur besitzt. Die infiltrierte Pechschmelze bildet nach dem Carbonisieren ein graphitähnliches Schichtgefüge, das zwar auch turbostratische Anteile enthalten kann, das jedoch geordneter und graphitähnlicher ist als der aus der nicht graphitisierbaren C-Vorstufe erhaltene turbostratische Kohlenstoff. Der graphitähnliche Kohlenstoff der Hülle zeigt insbesondere eine geringe Mikroporosität und damit auch eine geringere spezifische Oberfläche und eine vergleichsweise hohe elektrische Leitfähigkeit.

Das Carbonisieren der Kohlenstoff-Vorstufen erfolgt in der Regel bei hoher Temperatur bis zu 3000 °C unter einem möglichst sauerstofffreien Gas oder unter Vakuum. Die Mindesttemperatur für das Carbonisieren liegt bei etwa 500 °C und ergibt sich aufgrund der Zersetzungstemperatur der jeweiligen C-Vorstufe. Eine einsetzenden Carbid-Bildung kann die Carbonisierungstemperatur nach oben begrenzen, wie etwa bei einem SiO₂-haltigen Templat auf eine Temperatur unterhalb von 1000 °C wegen der Bildung von SiC.

Als Templatmaterial kommen Harttemplate aus oxidischen, nitridischen, carbidischen Werkstoffen in Frage, aber auch Template aus anderen Substanzen, wie Kunststoffe. Vorzugsweise ist das Templatmaterial SiO₂. Das Bereitstellen des Templats umfasst vorzugsweise einen Sootabscheideprozess, bei dem ein Einsatzmaterial durch Hydrolyse oder Pyrolyse zu Templatmaterial-Teilchen umgesetzt und diese auf einer Ablagerungsfläche abgeschieden werden. Mittels derartiger Plasma- oder CVD-Sootabscheideverfahren, die beispielsweise unter den Bezeichnungen OVD- oder VAD-Verfahren bekannt sind, werden im industriellen Maßstab synthetisches Quarzglas, Zinnoxid, Titanoxid, Titannitrid und andere synthetische Werkstoffe hergestellt.

Synthetisches SiO₂ ist mittels Sootabscheideverfahren unter Einsatz preiswerter Ausgangssubstanzen im industriellen Maßstab relativ kostengünstig herstellbar. Das SiO₂-Templat hält hohen Temperaturen beim Carbonisieren stand und ist bis mindestens 1000 °C chemisch inert.

Dabei ist es für die Eignung des abgeschiedenen Templatmaterials zur Herstellung eines Templats wesentlich, dass das Templatmaterial auf der Ablagerungsfläche, bei der es sich beispielsweise um ein Gefäß, einen Dorn, eine Platte oder einen Filter handeln kann, als poröser "Ruß" (hier als "Soot" bezeichnet) anfällt. Dies wird gewährleistet, indem die Temperatur der Ablagerungsfläche so niedrig gehalten wird, dass ein Dichtsintern des abgeschiedenen Templatmaterials verhindert wird. Als Zwischenprodukt wird ein so thermisch verfestigter aber poröser "Sootkörper" erhalten. Bei den so erhaltenen Sootkörpern erweist es sich als besonders günstig, dass diese herstellungsbedingt eine anisotrope Masseverteilung mit hierarchischer Porenstruktur aufweisen.

Beim Sootabscheideprozess kann das Templatmaterial auch in Form von Sootpulver anfallen, das anschließend anhand von Granulations-, Press-, Schlickeroder Sinterverfahren zu den Templat-Partikeln weiterverarbeitet wird. Als Zwischenprodukte sind Granulate oder Schülpen zu nennen. Die durch Sootabscheidung erzeugte Schicht des Templatmaterials kann mit geringem Aufwand zerkleinert werden, wobei Templat-Partikel mit plättchenartiger oder flockenartigen Morphologie erhalten werden.

Derartige Templat-Partikel, die sich durch eine nicht sphärische Morphologie auszeichnen, sind für den Einsatz im erfindungsgemäßen Verfahren besonders vorteilhaft. Denn Partikel mit sphärischer Morphologie, also Partikel mit einer Kugelform oder annähernd kugelförmiger Morphologie zeigen eine geringe Oberfläche in Bezug auf ihr Volumen. Demgegenüber zeigen Partikel mit nicht sphärischer Morphologie ein größeres Verhältnis von Oberfläche zu Volumen, was die Infiltration mit der Vorstufe vereinfacht und vergleichmäßigt.

Das erfindungsgemäße Verfahren ist gegenüber dem gattungsgemäßen Stand der Technik somit dahingehen modifiziert, dass Templatmaterial in Form von Templat-Partikeln und die erste Vorstufe in Form von Vorstufen-Partikeln aus schmelzbarem und polymerisierbarem Werkstoff bereitgestellt werden, wobei das Infiltrieren in der Schmelzphase erfolgt, so dass die erste Vorstufe vor oder beim Carbonisieren zu einem porenhaltigen Kohlenstoffschaum aufschäumt und ein Zwischenprodukt erhalten wird, bei dem Poren des Templatmaterials mindestens teilweise mit einem Kohlenstoffschaum gefüllt sind. Das Zwischenprodukt wird zu Zwischenprodukt-Partikeln zermahlen und zusammen mit schmelzbaren Partikeln der zweiten Vorstufe für den Kohlenstoff einer Schmelz-Infiltration unterzogen, so dass Schmelze der zweiten Vorstufe in Poren des Kohlenstoffschaums eindringt und diese nach dem Carbonisieren als Hülle der Kern-Hülle-Struktur mindestens teilweise verschließt.

Dieses Verfahren ist zur Herstellung von Kohlenstoffteilchen mit Kern-Hülle-Struktur gemäß der Erfindung geeignet, die im Folgenden näher erläutert werden.

Hinsichtlich dieser Kohlenstoffteilchen wird die oben genannte Aufgabe ausgehend von porösen Kohlenstoffteilchen der eingangs genannten Gattung erfindungsgemäß dadurch gelöst, dass die erste Kohlenstoffvarietät Kohlenstoffschaum bildet, und dass ein Volumenanteil des Kohlenstoffschaums von maximal 30 % von einem die Hülle der Kern-Hülle-Struktur bildenden graphitähnlichem Kohlenstoff aufgefüllt ist, und dass es Extemplat-Poren und Kohlenstoffschaum-Poren enthält, wobei die Extemplat-Poren eine mittlere Porengröße im Bereich von 100 nm und 1.000 nm haben und erzeugt sind durch Entfernen von Templatmaterial aus einem Zwischenprodukt, und wobei die Kohlenstoffschaum-Poren eine mittlere Porengröße im Bereich von 250 nm und 10.000 nm haben und ein Porenvolumen einnehmen, das mindestens um den Faktor 3 größer ist als das Porenvolumen der Extemplat-Poren.

Das erfindungsgemäße Kohlenstoffteilchen verfügt über Volumenbereiche mit unterschiedlicher Porencharakteristik:
(a) Extemplat-Poren: Ein Porenbereich, der durch Entfernen des rußartigen (sootförmigen) Templatmaterials entstanden ist. Diese bilden Hohlräume (ehemalige sphärische Nanoteilchen und deren Aggregate/Agglomerate) die über ehemalige - nun geöffnete - Sinterhälse dreidimensional miteinander vernetzt sind. Diese Hohlräume haben mittlere Größen im Bereich von Mesoporen und Makroporen, also im Bereich von 2 bis mehr als 50 nm. Extemplat-Poren sind überwiegend im Kernbereich der Kern-Hülle-Struktur zu finden; sie kommen aber auch im Bereich der Hülle vor.
(b) Kohlenstoffschaum-Poren: Dieser Porenbereich wird von Kohlenstoffschaum gebildet. Dieser füllt im Wesentlichen die Poren des ursprünglichen Templatmaterials und er bildet Wandungen der unter (a) genannten Extemplat-Poren. Der Kohlenstoffschaum ist Teil des Kerns der Kern-Hülle-Struktur und er hat eine spezifische Oberfläche nach BET im Bereich von 400 bis 600 m²/g. Er enthält Mesoporen und einen gewissen Anteil an Makroporen im Größenbereich von 250 bis 10.000 nm , wobei dieser Makroporen-Anteil bevorzugt ein spezifisches Volumen von mindestens 1,0 cm³/g, besonders bevorzugt mindestens 2 cm³/g einnimmt. Diese Kohlenstoffschaum-Poren haben eine mittlere Porengröße im Bereich von 250 nm und 10.000 nm und sie nehmen ein Porenvolumen ein, das mindestens um den Faktor 3 größer ist als das Porenvolumen der Extemplat-Poren.
(c) Poren der Hülle: Ein weiterer Porenbereich findet sich in der dünnen Schicht aus graphitähnlichem Kohlenstoff der Hülle der Kern-Hülle-Struktur. Die Hülle zeigt eine geringe Porosität mit überwiegend kleinen Poren, die Extemplat-Poren sein können oder die der "zweiten Porosität" des graphitähnlichen Kohlenstoffs zuzuordnen sind. Eine typische Größe mikroskopisch sichtbarer Poren liegt im Bereich von 20 - 250 nm und sie machen dort ein spezifisches Volumen von vorzugsweise maximal 0,8 cm³/g, besonders bevorzugt maximal0,5 cm³/g aus. Die spezifische Oberfläche nach BET der Hülle beträgt vorzugsweise weniger als 50 m²/g. Die Schichtdicke der Hülle kann gering sein, mit Mittelwerten zwischen 2 µm und 5 µm. Sie füllt den Kohlenstoffschaum teilweise auf, jedoch maximal zu 30%, vorzugsweise maximal 10%.

Beim Einsatz der erfindungsgemäßen Kohlenstoffteilchen als Elektrodenwerkstoff stellen die Porenbereiche (a) und (b) einen über relativ enge Kanäle (ehemalige Sinterhälse) dreidimensional miteinander vernetzten Porenraum zur Aufnahme und Fixierung von elektrolytischem Aktivmaterial zur Verfügung. Dieser Porenraum ist vom niedrigporösen Kohlenstoff der Hülle nach außen hin teilweise abgeschlossen und für das im Kern fixierte Aktivmaterial weitgehend undurchlässig. Die Hülle wirkt so einem Auswaschen von Aktivmaterial aus dem Porenraum entgegen, jedoch ohne die Zugänglichkeit eines flüssigen Elektrolyten zum Kern zu verhindern.

Der von Extemplat-Poren und Kohlenstoffschaum-Poren gebildete Kern des so erzeugten Kohlenstoffteilchens zeichnet sich somit durch ein großes Porenvolumen und eine hohe spezifische Oberfläche mit großem Aufnahmevolumen für Aktivmaterial aus und ermöglicht eine hohe Ladekapazität, während die Hülle auch bei geringer Dicke für Aktivmaterial weitgehend undurchlässig ist, jedoch einen elektrolytischen Zugang zu dem Kern ermöglicht und so für ein hohes Rückhaltevermögen und einen geringen Kapazitätsverlust sorgt.

Das Kohlenstoffteilchen wird beispielsweise zur Herstellung einer Elektrodenschicht einer Sekundärbatterie eingesetzt und fällt in der Regel mit plättchen- oder flockenartiger Morphologie an. Seine Schichtdicke liegt vorteilhafterweise in der Größenordnung der Elektrodenschichtdicke. Besonders bewährt haben sich mittleren Dicken im Bereich von 5 bis 100 µm, besonders bevorzugt im Bereich von 25 bis 75 µm. Dadurch werden Übergangswiderstände zwischen kleineren, diskreten Kohlenstoffpartikeln vermieden oder vermindert.

### Ausführungsbeispiel

Nachfolgend wird die Erfindung anhand eines Ausführungsbeispiels und einer Zeichnung näher erläutert. Im Einzelnen zeigt
- **Figur 1**: eine Vorrichtung zur Herstellung eines SiO₂-Sootkörpers in schematischer Darstellung,
- **Figuren 2 bis 5**: Verfahrensschritte zu Herstellung von erfindungsgemäßen Kohlenstoffteilchen in schematischer Darstellung, wobei die Spalte (a) jeweils eine Draufsicht auf ein Partikel zeigt und die Spalte (b) einen Schnitt durch das Partikel,
- **Figur 6**: eine REM-Aufnahme des Kerns eines erfindungsgemäßen Kohlenstoffteilchens mit hoher Porosität,
- **Figur 7**: eine REM-Aufnahme der Außenhaut eines erfindungsgemäßen Kohlenstoffteilchens mit geringer Porosität,
- **Figur 8**: eine REM-Aufnahme des Kontaktbereiches von Kern und Hülle in einem Kohlenstoffteilchen gemäß der Erfindung,
- **Figur 9**: ein Diagramm zur Porengrößenverteilung des hochporösen Kerns, und
- **Figur 10**: ein Diagramm zur Porengrößenverteilung der wenig porösen Hülle.

### Herstellen von Templatmaterial mit hierarchischer Porenstruktur

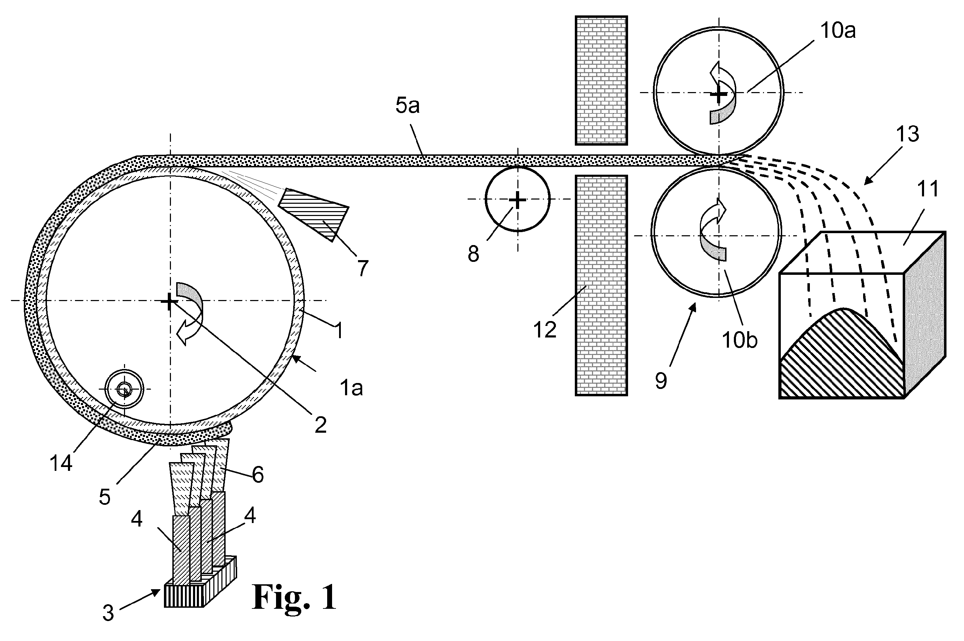

Die in **Figur 1** dargestellte Vorrichtung dient zur Herstellung poröser Granulatteilchen aus SiO₂, die beim erfindungsgemäßen Verfahren als Harttemplat zur Herstellung von porösem Kohlenstoff eingesetzt werden. Diese Vorrichtung und das Verfahren zur Harttemplat-Herstellung sind in der DE 10 2011 014 875 B3 erläutert, deren diesbezüglicher Inhalt in die vorliegende Anmeldung hiermit einbezogen wird.

Die Vorrichtung umfasst eine um ihre Rotationsachse 2 rotierbare Trommel 1, die aus einem Grundkörper aus Edelstahl besteht, der mit einer dünnen Schicht aus Siliciumcarbid belegt ist. Die Trommel 1 hat einen Außendurchmesser von 30 cm und eine Breite von 50 cm. Auf der Mantelfläche 1a der Trommel 1 wird eine Schicht 5 aus SiO₂-Soot abgeschieden und unmittelbar zu einer SiO₂-porösen Sootplatte 5a leicht thermisch verdichtet.

Für die Sootabscheidung werden Flammhydrolysebrenner 4 eingesetzt, von denen vier in einer gemeinsamen Brennerreihe 3 in Richtung der TrommelLängsachse 2 hintereinander angeordnet sind. Die Brennerreihe 3 wird parallel zur Rotationsachse 2 zwischen zwei ortsfesten Wendepunkten hin- und her bewegt. Den Flammhydrolysebrennern 4 werden als Brenngase Sauerstoff und Wasserstoff sowie Octamethylcyclotetrasiloxan (OMCTS) als Einsatzmaterial für die Bildung von SiO₂-Partikeln zugeführt. Die Größe der dabei erzeugten SiO₂-Primärpartikel liegt im Nanometerbereich, wobei sich mehrere Primärpartikel in der Brennerflamme 6 zusammenlagern und in Form mehr oder weniger sphärischer Aggregate mit einer spezifischen Oberfläche nach BET im Bereich von 25 m²/g anfallen, die auf der Trommel-Mantelfläche 1 a eine durchgängige, gleichmäßig dicke SiO₂-Sootschicht 5 bilden.

Die Rotationsgeschwindigkeit der Trommel 1 und die Abscheiderate der Flammhydrolysebrenner 4 sind so abgestimmt, dass sich eine SiO₂-Sootschicht 5 mit einer Breite von etwa 40 cm und einer Dicke von etwa 45 µm ergibt (die Sootschicht ist in Figur 1 aus Darstellungsgründen übertrieben dick eingezeichnet). Die Brenner 4 bewirken gleichzeitig ein gewisses Vorsintern der Sootschicht 5 zu einer Sootplatte 5a, indem sie auf der Oberfläche der obersten Sootlage eine mittlere Temperatur von etwa 1200°C erzeugt. Unterstützt wird das Vorsintern von einem rohrförmigen Infrarotstrahler 14, der innerhalb der als Hohltrommel ausgebildeten Trommel 1 im linken unteren Quadranten angeordnet ist, und der die Mantelfläche der Trommel 1 kurz nach dem Aufbringen der Sootschicht 5 von der Innenseite aus erhitzt.

Die so erhaltene poröse, leicht vorgesinterte Sootplatte 5a hat eine mittlere relative Dichte von etwa 22 % (bezogen auf die Dichte von Quarzglas mit 2,21 g/m³).

Nach etwas mehr als einer halben Trommel-Umdrehung gelangt die Sootplatte 5a in den Einwirkungsbereich eines Gebläses 7, mittels dem ein gegen die Unterseite der Sootplatte 5a gerichteter Gasstrom erzeugt wird, so dass sich die Sootplatte 5a von der Trommel-Mantelfläche 1 a abhebt.

Die Sootplatte 5a wird anschließend über eine Stützrolle 8 einem Brechwerkzeug 9 zugeführt, das aus zwei gegensinnig rotierenden Rollen 10a, 10b besteht, zwischen denen ein Spalt mit der Dicke der Sootplatte 5a vorgesehen ist, und deren Oberflächen mit Längsprofilen versehen sind.

Die durch den Spalt hindurchlaufende Sootplatte 5a wird durch die Längsprofile der Rollen 10, 10a in ungefähr gleich große Bruchstücke (Granulatteilchen 13) zerteilt, die in einem Auffangbehälter 11 gesammelt werden.

Zwischen der Trommel 1 und dem Brechwerkzeug 9 ist eine Trennwand 12 vorgesehen, die mit einer Öffnung zur Durchführung der Sootplatte 5a versehen ist und die zur Abschirmung des Sootabscheideprozesses von den Auswirkungen des Zerkleinerungsprozesses dient.

Die nach dem Verfahren erhaltenen Granulatteilchen 13 haben eine plättchenartige oder flockenartige Morphologie und eine Dicke, die in etwa der Dicke der Sootplatte 5a entspricht, also etwa 45 µm. Infolge des beschriebenen Brechvorgangs sind auch die Granulatteilchen 13 in etwa gleich groß, so dass sich eine enge Korngrößenverteilung einstellt.

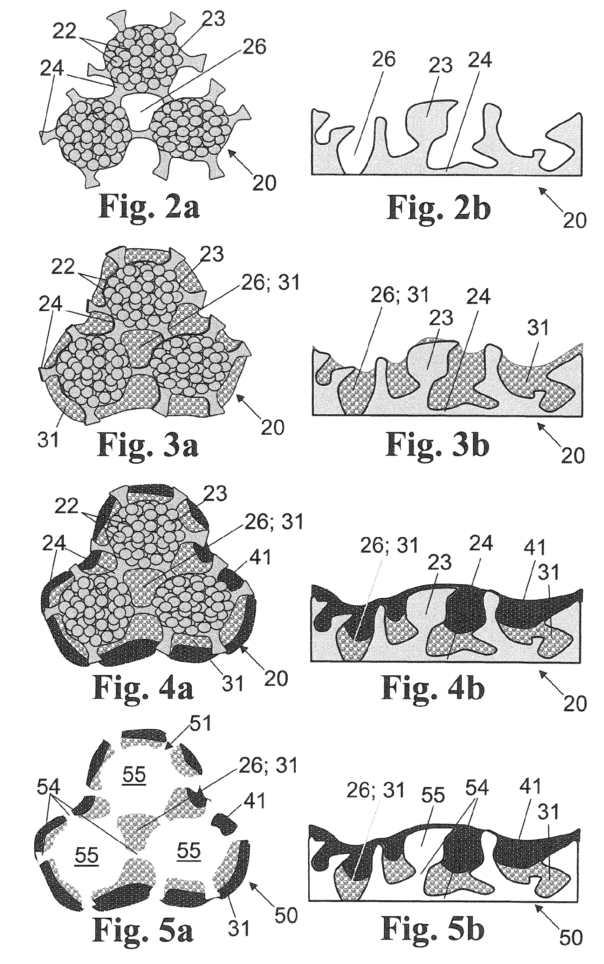

Diese Granulatteilchen 13 zeigen herstellungsbedingt eine anisotrope Masseverteilung mit hierarchischer Porenstruktur, wie dies **Figur 2a** schematisch zeigt. Diese Porenstruktur ist darauf zurückzuführen, dass bei der Gasphasenabscheidung in der Reaktionszone SiO₂-Primärpartikel 22 mit Partikelgrößen im Nanometerbereich entstehen, die sich auf ihrem Weg zur Ablagerungsfläche zusammenlagern und in Form mehr oder weniger sphärischer Agglomerate (23) oder Aggregate (23) auf der Ablagerungsfläche anfallen. Diese "Sekundärteilchen" 23 bestehen aus einer unterschiedlichen Anzahl von Primärpartikeln 22 und sind über so genannte Sinterhälse 24 miteinander verbunden. Innerhalb der Sekundärteilchen 23 - zwischen den Primärpartikeln 22 - liegen besonders kleine Hohlräume und Zwischenräume im Nanometerbereich (Mesoporen) vor (in Figur 2a nicht erkennbar), wohingegen sich zwischen den einzelnen Sekundärteilchen 23 Makroporen 26 mit typischen lichten Weiten um 400 nm bis 1.000 nm ausbilden.

### Herstellen einer Trockenmischung aus Partikeln des Templatmaterials und einer schaumbildunqsfähiqen Kohlenstoff-Vorstufe für porösen Kohlenstoff

Durch Mahlen von Rohrzucker und Absieben wird eine feinkörnige Rohrzuckerpulverfraktion erzeugt, die im Wesentlichen aus sphärischen Partikeln mit Partikelgrößen zwischen 5 und 20 µm besteht. Die Rohrzucker - und die oben erläuterten Granulatteilchen mit Dicken im Bereich von 20 und 50 µm werden im Gewichtsverhältnis 50:50 homogen miteinander vermischt.

### Aufschmelzen der Partikelmischung und erste, homogene Infiltration

Die Partikel-Mischung wird auf eine Temperatur von etwa 160°C erhitzt. Rohrzucker wird dabei zähflüssig und beginnt, sich zu zersetzen. Gleichzeitig umhüllt die zähflüssige Rohrzuckerschmelze die SiO₂-Granulatteilchen und dringt in die Poren ein. Das Verhältnis von Rohrzucker- und Granulatteilchenmasse ist so gewählt, dass die Rohrzuckerschmelze die Poren füllt, so dass kein nennenswertes freies Porenvolumen mehr übrig bleibt und dabei nahezu vollständig verbraucht wird. Nach einer Infiltrationsdauer von etwa 30 min ist die homogene Infiltration der Poren weitgehend abgeschlossen. Die Poren der Granulatteilchen sind nun weitgehend mit einer schmelzflüssigen Rohrzuckermasse gefüllt.

Danach wird die Temperatur langsam auf etwa 205 °C erhöht und etwa 60 min gehalten. Bei dieser Temperatur unterliegt Rohrzucker unter dehydrierenden Bedingungen einer rasch ablaufenden Polykondensationsreaktion unter Abspaltung von Wasser. Bis zur vollständigen Umwandlung in Kohlenstoff ist die verbleibende Rohrzucker-Schmelze noch weitgehend plastisch verformbar. Dadurch führt kann das in der Polykondensationsreaktion freigesetzte und abdampfende Wasser eine Blasenbildung bewirken, die sich als Schaumbildung des Rohrzuckers zeigt. Diese Blasenbildung kann zu relativ großen Blasen innerhalb der Makroporosität der Granulatteilchen führen, so dass die Poren infolge eines vergleichsweise hohen Blasenvolumens mindestens teilweise und im Idealfall vollständig mit Schaum aufgefüllt werden.

### Carbonisieren

Nach Abschluss des Schaumbildungsprozesses wird die Behandlungstemperatur auf etwa 650 °C erhöht und der vorab aufgeschäumte Rohrzucker in StickstoffAtmosphäre zu porösem, turbostratischem Kohlenstoff carbonisiert. Nach vollständiger Carbonisierung wird als "Zwischenprodukt" eine Kompositmasse aus porösen SiO₂-Granulatteilchen und Kohlenstoffschaum erhalten. Dieser Verfahrensstand ist schematisch in den **Figuren 3a und 3b** gezeigt. Die Sekundärteilchen 23 sind außen und innen mit einer Lage aus porösem Kohlenstoffschaum 31 belegt, insbesondere auch die ehemaligen Poren 26 zwischen den Sekundärteilchen 23. Die Porosität des Kohlenstoffschaums 31 wird überwiegend (mehr als 50 % des Porenvolumens) von Meso- und Makroporen mit Porengrößen im Bereich von 200 bis 1000 nm gebildet.

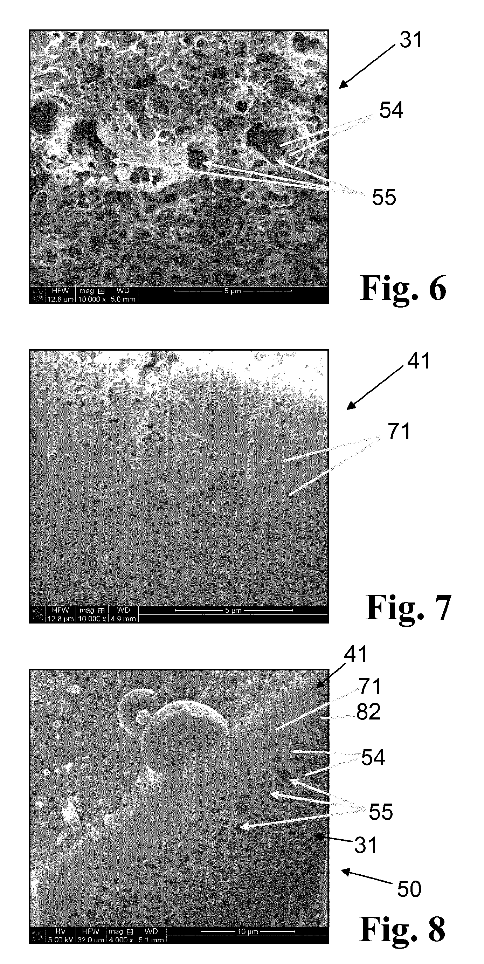

Die REM-Aufnahme von **Figur 6** zeigt die so erhaltene Porenverteilung mit einer Vielzahl zusammenhängender Poren und Hohlräume unterschiedlicher Größe. In der schwammartigen Masse ist eine Vielzahl größerer Hohlräume 55 verteilt, die umgeben sind von kleineren Hohlräumen beziehungsweise Kanälen 54. Eine Messung der spezifischen inneren Oberfläche nach der BET-Methode ergibt Messwerte um 450 m²/g.

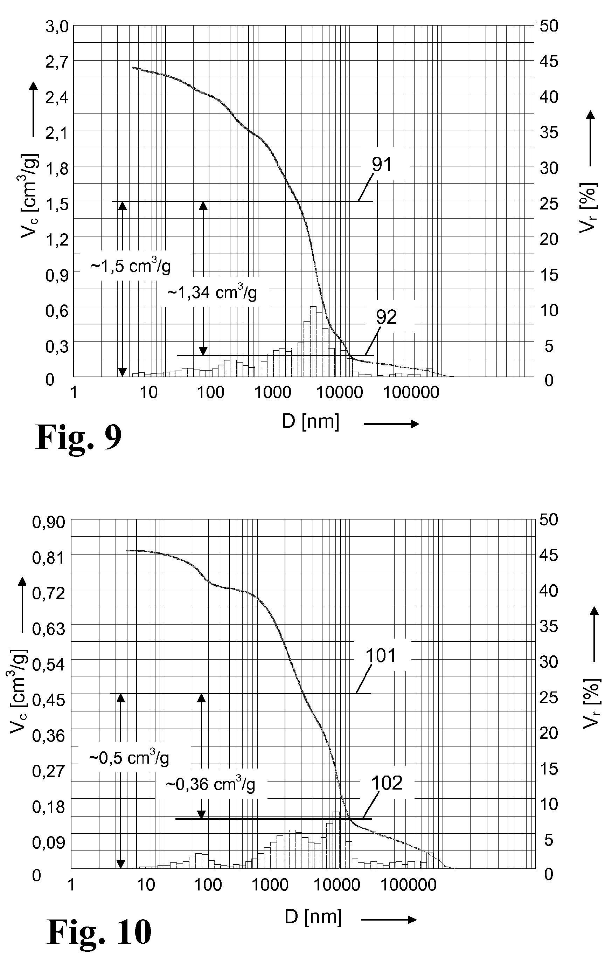

Das Diagramm von **Figur 9** zeigt die Porengrößenverteilung des Kohlenstoffschaums. Auf der linken Ordinate ist das kumulative Porenvolumen V_{c} in [cm³/g] und auf der rechten Ordinate das relative Porenvolumen Vᵣ in [%] gegen den Porendurchmesser D in [nm] aufgetragen. Es ist erkennbar, dass ein erstes Maximum der Porengrößenverteilung im Mesoporenbereich um 50 nm und ein zweites Maximum der Porengrößenverteilung im Makroporenbereich bei Porengrößen von 250 bis 1000 nm liegt. Es gibt auch eine Anzahl größerer Poren mit D-Werten bis etwa 10.000 nm. Makroporen in der Größenordnung 250 bis 10.000 nm ergeben ein Gesamt-Porenvolumen etwa 1,5 cm³/g (Differenz des kumulativen Porenvolumens zwischen der Nulllinie und Linie 91), wobei aber der größte Teil des Porenvolumens auf Makroporen in der Größenordnung 250 bis 1.000 nm entfällt, die ein Gesamt-Porenvolumen von etwa 1,34 cm³/g ergeben (Differenz des kumulativen Porenvolumens zwischen den Linien 91 und 92).

Dabei ist zu beachten, dass die gezeigten Messergebnisse mittels einer Quecksilber-Porosimetermessung erhalten wurden. Die Technik beruht auf der Intrusion der nicht benetzenden Flüssigkeit Quecksilber in ein poröses System unter Druck. Diese Methode liefert zuverlässige Informationen über die Porengrößenverteilung, das Porenvolumen, die Scheinbare und Wahre Dichte im Bereich von Makroporen bis zu großen Mesoporen, jedoch nicht für Poren im Nanometerbereich, so dass sich für die spezifische Oberfläche eine Diskrepanz zu dem nach der BET-Methode ermittelten Wert von 450 m²/g ergibt. Dies ist dadurch zu erklären, dass die Poren im Nanometerbereich, die einen großen Anteil zur gesamten inneren Oberfläche ausmachen, von der Quecksilber-Porosimetermessung nicht erfasst werden können.

### Zermahlen des Zwischenprodukts

Das "Zwischenprodukt" fällt als leicht agglomerierte Masse an. Es wird schonend unter Einsatz einer Prallstrommühle zu Zwischenprodukt-Partikeln mit Partikelgrößen im Bereich zwischen 25 und 75 µm aufgebrochen und zerkleinert. Der Feinanteil mit Partikelgrößen < 25 µm wird entfernt.

### Herstellen einer Trockenmischung aus Zwischenprodukt-Partikeln und einer Kohlenstoff-Vorstufe für graphitähnlichen Kohlenstoff

Durch Mahlen von mesophasigem Pech und Absieben wird ein Pechpulver erzeugt, das im Wesentlichen aus sphärischen Partikeln mit Partikelgrößen um 5 µm besteht. Das Pechpulver und die Zwischenprodukt-Partikel werden im Gewichtsverhältnis 1: 6homogen miteinander vermischt.

### Aufschmelzen der Partikelmischung und zweite, inhomogene Infiltration

Die Partikel-Mischung wird auf eine Temperatur von 300°C erhitzt. Das zähflüssige Pech umhüllt die Zwischenprodukt-Partikel und dringt in die oberflächlich freiliegenden Kohlenstoffschaum-Poren ein. Das Verhältnis von Pech- und Zwischenprodukt-Partikelvolumen ist so gewählt, dass es zu einer "inhomogenen Infiltration" kommt, das heißt, dass eine vollständige Durchdringung des Kohlenstoffschaums ausgeschlossen ist. Vielmehr ist nur ein Eindringen des Pechs in oberflächennahe Bereiche des Kohlenstoffschaums möglich.

Nach Abschluss des Infiltrationsschrittes hat das zähflüssige Pech die an der Oberfläche der Zwischenprodukt-Partikel vorhandenen Kohlenstoffschaum-Poren weitgehend verschlossen, ohne dass es ansonsten besonders tief in den Kohlenstoffschaum eingedrungen ist. Die Eindringtiefe ist unterschiedlich -je nach Porosität - und entspricht etwa eine mittleren Schichtdicke im Bereich von 1 bis 5 µm. Es verbleibt somit nach der inhomogenen Infiltration immer noch ein nennenswertes freies Porenvolumen des Kohlenstoffschaums.

### Carbonisieren

Nach einer Infiltrationsdauer von 30 min wird die Temperatur auf 700 °C erhöht und das Pech dadurch carbonisiert. Dieser Verfahrensstand ist schematisch in den **Figuren 4a und 4b** gezeigt. Die Oberflächen der ehemaligen Zwischenprodukt-Partikel - das sind im Wesentlichen die von Kohlenstoffschaum 31 durchdrungenen und belegten Sekundärteilchen 23 - sind dabei mit einer dünnen Lage 41 aus graphitähnlichem Kohlenstoff. Diese Lage 41 schließt vorher offene Poren des porösen Kohlenstoffschaums 31 teilweise nach außen ab, wie insbesondere die Ansicht in **Figur 4b** zeigt. Sie bildet eine "Außenhaut" oder "Hülle" im Sinne der Erfindung. Der an der Oberfläche der Kohlenstoffteilchen anliegende Kohlenstoffschaum 31 ist im Mittel zu weniger als 10 % aufgefüllt, wobei die oberflächennaher Kohlenstoffschaum-Poren von graphitähnlichem Kohlenstoff weitgehend verschlossen sind.

Es wird somit eine poröse Kompositmasse aus nicht sphärischen porösen Zwischenprodukt-Partikeln erhalten, die einen Kern aus Templatmaterial und Kohlenstoffschaum haben, der mit einer dünnen Hülle aus porenarmem, graphitähnlichem Kohlenstoff belegt ist.

Die REM-Aufnahme von **Figur 7** zeigt die Porenverteilung der Hülle 41 in gleicher Vergrößerung wie der Kohlenstoffschaum 31 von Figur 6. Es sind eine Anzahl kleiner Poren 71 aber kaum Makroporen erkennbar. Eine Messung der spezifischen inneren Oberfläche dieses Materials nach der BET-Methode ergibt Messwerte um 25 m²/g (bei einer Schicht mit freien Oberflächen an Unter- Oberseite).

Das Diagramm von **Figur 10** zeigt die Porengrößenverteilung der Hülle 41. Die Gesamtporosität der Kohlenstoff-Hülle 41 liegt bei 0,81 cm³/ g und damit deutlich niedriger als die Gesamtporosität des Kohlenstoffschaums 31, die etwa 2,65 cm³/g beträgt (siehe Figur 9). Auch in der Hülle 41 wird eine Anzahl größerer Poren mit D-Werten bis etwa 10.000 nm gemessen. Makroporen in der Größenordnung 250 bis 10.000 nm ergeben ein Gesamt-Porenvolumen etwa 0,5 cm³/g (Differenz des kumulativen Porenvolumens zwischen der Nulllinie und Linie 101). Das Porenvolumen mit Makroporen in der Größenordnung 250 bis 1.000 nm liegt bei 0,36 cm³/g (Differenz des kumulativen Porenvolumens zwischen den Linien 101 und 102).

### Entfernen des Templatmaterials

Das SiO₂-Templatmaterial der Granulatteilchen wird anschließend entfernt, indem die Kompositmasse in ein Flusssäurebad eingebracht wird. Nach dem Wegätzen der SiO₂-Masse wird das Material gespült und getrocknet. Es werden Flocken aus porösem Kohlenstoff erhalten.

Ein derartiges poröses Kohlenstoffteilchen 50 ist schematisch in den **Figuren 5a und 5b** dargestellt. Das vorher von SiO₂ belegte, netzwerkartig zusammenhängende Templatvolumen bildet nun einen zusammenhängenden Porenraum 51 aus kleinen und großen Extemplat-Poren (54; 55). Diese durchziehen sowohl den Kohlenstoffschaum 31 als auch - wenn auch weniger die Hülle 41 aus weniger porösem, grafitähnlichem Kohlenstoff. Der Kern dieses Kohlenstoffteilchens 51 enthält
(a) Extemplat-Poren 55; 54, die über ehemalige - nun geöffnete - Sinterhälse 54 dreidimensional miteinander vernetzt sind. Die Extemplat-Poren haben mittlere Größen im Bereich von Mesoporen und Makroporen, also im Bereich von 2 bis mehr als 50 nm.
(b) Kohlenstoffschaum-Poren 31, die im Wesentlichen die Poren des ursprünglichen Templatmaterials füllen und Mesoporen und einen gewissen Anteil an Makroporen bereitstellen. Diese Kohlenstoffschaum-Poren 31 nehmen ein Porenvolumen ein, das um etwa den Faktor 3 größer ist als das Porenvolumen der Extemplat-Poren.

Das so erhaltene Kohlenstoffteilchen 50 ist relativ filigran und fragil. Es ist für den Einsatz als Elektrodenmaterial für elektrochemische Zellen in Batterien und Sekundärbatterien geeignet. Die REM-Aufnahme gemäß **Figur 8** zeigt die Grenzfläche 82 zwischen Kohlenstoffschaum 31 und Hülle 41. Die große innere Oberfläche des Kohlenstoffschaums 31 in Verbindung mit dem durch Kanäle 54 und großen Hohlräumen 55 (Makroporen) gebildeten, dreidimensionalen Porenraum kann Substanzen fixieren und zurückzuhalten. Das Entweichen dieser Substanzen wird durch vergleichsweise enge Kanäle 54 vermindert, welche die Makroporen 55 miteinander verbinden und von der dichten Kohlenstoff-Haut 41 mit wenigen, kleinen Poren 71, welche den Kohlenstoffschaum nach außen hin abschließt. Der Kohlenstoffschaum 31 als auch die Hülle 41 (Außenhaut) sind durchsetzt von einer Vielzahl kleinerer Poren (Mesoporen), die zum großen Teil kleine Extemplat-Poren sind.

Die bei der Entladung einer Lithium-Schwefel-Batterie gebildeten und freigesetzten Schwefelverbindungen werden im Kernbereich des Kohlenstoffteilchens 50 physikalisch gebunden, wodurch verhindert wird, dass sie sich im Elektrolyten gleichmäßig verteilen und dadurch für die elektrochemische Reaktion nicht mehr zur Verfügung stehen.

## Patentansprüche

1. Verfahren zur Herstellung poröser Kohlenstoffteilchen (50) mit Kern-Hülle-Struktur, umfassend folgende Verfahrensschritte:
(a) Bereitstellen eines Poren enthaltenden Templatmaterials (20) aus anorganischem Werkstoff,
(b) Infiltrieren der Poren (26) des Templatmaterials mit einer ersten Vorstufe für Kohlenstoff einer ersten Varietät,
(c) Carbonisieren der ersten Vorstufe, so dass in den Poren (26) eine erste Ablagerung aus dem Kohlenstoff der ersten Varietät mit einer ersten Porosität gebildet wird,
(d) Infiltrieren von nach dem Carbonisieren verbleibender Poren mit einer zweiten Vorstufe für Kohlenstoff einer zweiten Varietät,
(e) Carbonisieren der zweiten Vorstufe, wobei eine zweite Ablagerung aus graphitähnlichem Kohlenstoff aus dem Kohlenstoff der zweiten Varietät mit einer zweiten Porosität gebildet wird, die geringer ist als die erste Porosität,
(f) und Entfernen des Templatmaterials (20),
**gekennzeichnet durch** folgende Maßnahmen:
(A) das Templatmaterial wird in Form von Templat-Partikeln (20) und die erste Vorstufe wird in Form von Vorstufen-Partikeln erster Art aus schmelzbarem und polymerisierbarem Werkstoff bereitgestellt, wobei zum Infiltrieren gemäß Verfahrensschritt (b) eine Partikelmischung enthaltend Templat-Partikel (20) und Vorstufen-Partikel erster Art erschmolzen wird und dabei Schmelze der ersten Vorstufe in die Poren (26) der Templat-Partikel eindringt und darin vor oder beim Carbonisieren gemäß Verfahrensschritt (c) unter Polykondensation zu einem porenhaltigen Kohlenstoffschaum (31) aufschäumt, so dass ein Zwischenprodukt erhalten wird, bei dem Poren (26) des Templatmaterials (20) mindestens teilweise mit einem Kohlenstoffschaum (31) gefüllt sind, und
(B) das Zwischenprodukt wird zu Zwischenprodukt-Partikeln zermahlen und die zweite Vorstufe für den Kohlenstoff der zweiten Varietät wird in Form von Vorstufen-Partikeln zweiter Art aus schmelzbarem Werkstoff bereitgestellt, wobei zum Infiltrieren gemäß Verfahrensschritt (d) eine Partikelmischung enthaltend Zwischenprodukt-Partikel und Vorstufen-Partikel zweiter Art erschmolzen wird und dabei Schmelze der zweiten Vorstufe in Poren des Kohlenstoffschaums eindringt und diese nach dem Carbonisieren gemäß Verfahrensschritt (e) als Hülle (41) aus graphitähnlichem Kohlenstoff der Kern-Hülle-Struktur mindestens teilweise verschließt.

2. Verfahren nach Anspruch 1, **dadurch gekennzeichnet, dass** zum Infiltrieren gemäß Verfahrensschritt (d) die Menge von Kohlenstoff der zweiten Varietät so niedrig eingestellt wird, dass die Poren des Kohlenstoffschaums (31) im Mittel zu maximal 30%, vorzugsweise zu maximal 10 % gefüllt sind.

3. Verfahren nach Anspruch 1 oder 2, **dadurch gekennzeichnet, dass** die Hülle (31) eine mittlere Dicke von maximal 5 µm aufweist.

4. Verfahren nach einem der vorhergehenden Ansprüche, **dadurch gekennzeichnet, dass** beim Zermahlen gemäß Maßnahme (B) ZwischenproduktPartikel mit einer mittleren Partikelgröße im Bereich von 5 bis 100 µm, vorzugsweise im Bereich von 25 bis 75 µm erzeugt werden.

5. Verfahren nach einem der vorhergehenden Ansprüche, **dadurch gekennzeichnet, dass** ein Kohlenhydrat als erste Vorstufe eingesetzt wird, das mindestens 30 %, vorzugsweise mindestens 50 % ihrer Ausgangsmasse vor der Polykondensationsreaktion als Gas abspaltet.

6. Verfahren nach einem der vorhergehenden Ansprüche, **dadurch gekennzeichnet, dass** der Kern (31; 54, 55) eine spezifische Oberfläche nach BET im Bereich von 400 bis 600 m²/g und die Hülle (41) eine spezifische Oberfläche nach BET im Bereich von weniger als 50 m²/g aufweist.

7. Verfahren nach einem der vorhergehenden Ansprüche, **dadurch gekennzeichnet, dass** der Kern (31; 54, 55) Makroporen im Größenbereich von 250 bis 10.000 nm enthält, die ein spezifisches Volumen von mindestens 1,0 cm³/g, vorzugsweise mindestens 2 cm³/g einnehmen.

8. Verfahren nach einem der vorhergehenden Ansprüche, **dadurch gekennzeichnet, dass** in der Hülle (31) Poren mit Porengrößen im Bereich von 250 nm bis 10.000 nm ein spezifisches Volumen von maximal 0,8 cm³/g, vorzugsweise maximal 0,5 cm³/g einnehmen.

9. Verfahren nach einem der vorhergehenden Ansprüche, **dadurch gekennzeichnet, dass** zum Infiltrieren gemäß Verfahrensschritt (d) eine zweite Vorstufe für graphitisierbaren Kohlenstoff eingesetzt wird, insbesondere Pech.

10. Poröse Kohlenstoffteilchen mit Kern-Hülle-Struktur, aufweisend einen Kern (31; 54, 55) aus einer ersten Kohlenstoffvarietät mit einer ersten Porosität und einer den Kern (31; 54, 55) umgebenden Hülle (41) aus einer zweiten Kohlenstoffvarietät aus graphitähnlichem Kohlenstoff mit einer zweiten Porosität, die geringer ist als die erste Porosität, **dadurch gekennzeichnet, dass** die erste Kohlenstoffvarietät Kohlenstoffschaum (31) bildet, und dass ein Volumenanteil des Kohlenstoffschaums (31) von maximal 30 % von einem die Hülle (41) der Kern-Hülle-Struktur bildenden graphitähnlichem Kohlenstoff aufgefüllt ist, und dass es Extemplat-Poren (54; 55) und Kohlenstoffschaum-Poren enthält, wobei die Extemplat-Poren (54; 55) eine mittlere Porengröße im Bereich von 100 nm und 1.000 nm haben und erzeugt sind durch Entfernen von Templatmaterial (20) aus einem Zwischenprodukt, und wobei die Kohlenstoffschaum-Poren eine mittlere Porengröße im Bereich von 250 nm und 10.000 nm haben und ein Porenvolumen einnehmen, das mindestens um den Faktor 3 größer ist als das Porenvolumen der Extemplat-Poren (54; 55).

11. Kohlenstoffteilchen nach Anspruch 10, **dadurch gekennzeichnet, dass** ein Volumenanteil des Kohlenstoffschaums (31) von maximal 10 % von graphitähnlichem Kohlenstoff aufgefüllt ist.

12. Kohlenstoffteilchen nach Anspruch 10 oder 11, **dadurch gekennzeichnet, dass** die Hülle (41) eine mittlere Dicke von maximal 5 µm aufweist.

13. Kohlenstoffteilchen nach einem der Ansprüche 10 bis 12, **dadurch gekennzeichnet, dass** der Kern (31; 54, 55) eine spezifische Oberfläche nach BET im Bereich von 400 bis 600 m²/g und die Hülle eine spezifische Oberfläche nach BET im Bereich von weniger als 50 m²/g aufweist, wobei der Kern (31; 54, 55) Makroporen im Größenbereich von 250 bis 10.000 nm enthält, die ein spezifisches Volumen von mindestens 1,0 cm³/g, vorzugsweise mindestens 2 cm³/g einnehmen, und dass in der Hülle (41) Poren mit Porengrößen im Bereich von 20 bis 250 nm ein spezifisches Volumen von maximal 0,8 cm³/g, vorzugsweise maximal 0,5 cm³/g einnehmen.

14. Kohlenstoffteilchen nach einem der Ansprüche 10 bis 13, **dadurch gekennzeichnet, dass** sie plättchen- oder flockenartige Morphologie und eine mittlere Dicke im Bereich von 5 bis 100 µm, vorzugsweise im Bereich von 25 bis 75 µm haben.

## Claims

1. A method for producing porous carbon particles (50) having a core/shell structure, the method comprising the following steps:
a. providing a pore-containing template material (20) consisting of inorganic material,
b. infiltrating the pores (26) of the template material with a first precursor for carbon of a first variety,
c. carbonizing the first precursor so that in the pores (26) a first deposit of the carbon of the first variety is formed with a first porosity,
d. infiltrating pores remaining after carbonizing with a second precursor for carbon of a second variety,
e. carbonizing the second precursor, so as to form a second deposit of graphite-like carbon from the carbon of the second variety with a second porosity lower than the first porosity,
f. and removing the template material (20),
**characterized by** the following measures:
(A) the template material is provided in the form of template particles (20) and the first precursor is provided in the form of precursor particles of a first species of fusible and polymerizable material, wherein for infiltrating according to method step (b) a particle mixture containing template particles (20) and precursor particles of the first species is melted and melt of the first precursor thereby penetrates into the pores (26) of the template particles and foams up therein prior to or during carbonizing according to method step (c) under polycondensation into a pore-containing carbon foam (31), so that an intermediate product is obtained in which pores (26) of the template material (20) are filled at least in part with a carbon foam (31), and
(B) the intermediate product is ground into intermediate-product particles and the second precursor for the carbon of the second variety is provided in the form of precursor particles of the second species of fusible material, wherein for infiltrating according to method step (c) a particle mixture containing intermediate-product particles and precursor particles of the second species are melted and melt of the second precursor thereby penetrates into pores of the carbon foam and closes the same at least in part after carbonizing according to method step (e) as a shell (41) of graphite-like carbon of the core/shell structure made.

2. The method according to claim 1, **characterized in that** for infiltrating according to method step (d) the amount of carbon of the second variety is set to be so small that the pores of the carbon foam (31) are filled on average to not more than 30%, preferably not more than 10%.

3. The method according to claim 1 or 2, **characterized in that** the shell (31) has a mean thickness of not more than 5 µm.

4. The method according to any one of the preceding claims, **characterized in that** during grinding according to measure (B) intermediate-product particles are produced with a mean particle size in the range of 5 µm to 100 µm, preferably in the range of 25 µm to 75 µm.

5. The method according to any one of the preceding claims, **characterized in that** a carbohydrate is used as the first precursor, which separates at least 30%, preferably at least 50% of its start mass prior to the polycondensation reaction as gas.

6. The method according to any one of the preceding claims, **characterized in that** the core (31; 54, 55) has a specific BET surface area in the range of 400-600 m²/g and the shell (41) has a specific BET surface area in the range of less than 50 m²/g.

7. The method according to any one of the preceding claims, **characterized in that** the core (31; 54, 55) contains macropores in the size range of 250 nm to 10,000 nm, which occupy a specific volume of at least 1.0 cm³/g, preferably at least 2 cm³/g.

8. The method according to any one of the preceding claims, **characterized in that** in the shell (41) pores with pore sizes in the range of 250 nm to 10,000 nm occupy a specific volume of not more than 0.8 cm³/g, preferably not more than 0.5 cm³/g.

9. The method according to any one of the preceding claims, **characterized in that** for infiltrating according to method step (d) a second precursor for graphitizable carbon is used, particularly pitch.

10. Porous carbon particles with a core/shell structure, comprising a core (31; 54, 55) of a first carbon variety with a first porosity and a shell (41) which surrounds the core (31; 54, 55) and consists of a second carbon variety with a second porosity which is lower than the first porosity, **characterized in that** the first carbon variety forms carbon foam (31), and that a volume portion of the carbon foam (31) of not more than 30% is filled by a carbon forming the shell (41) of the core/shell structure with the lower second porosity, so that the carbon particle contains extemplate pores (54; 55) and carbon foam pores, wherein the extemplate pores (54; 55) have a mean pore size in the range of in a range of 100 nm and 1,000 nm and are produced by removing template material (20) from an intermediate product, and wherein the carbon foam pores have a mean pore size in the range of 250 nm and 10,000 nm and occupy a pore volume which is greater at least by the factor 3 than the pore volume of the extemplate pores (54; 55).

11. Carbon particles according to claim 10, **characterized in that** a volume portion of the carbon foam (31) of not more than 10% is filled by graphite-like carbon.

12. Carbon particles according to claim 10 or 11, **characterized in that** the shell (41) has a mean thickness of not more than 5 µm.

13. Carbon particles according to any one of claims 10 to 12, **characterized in that** the core (31; 54, 55) has a specific BET surface area in the range of 400-600 m²/g and the shell has a specific BET surface area in the range of less than 50 m²/g, wherein the core (31; 54, 55) contains macropores in the size range of 250 nm to 10,000 nm, which occupy a specific volume of at least 1.0 cm³/g, preferably at least 2 cm³/g, and that in the shell (41) pores with pore sizes in the range of 20 nm to 250 nm occupy a specific volume of not more than 0.8 cm³/g, preferably not more than 0.5 cm³/g.

14. Carbon particles according to any one of claims 10 to 13, **characterized in that** they have a platelet- or flake-like morphology and a mean thickness in the range of 5 µm to 100 µm, preferably in the range of 25 µm to 75 µm.

## Revendications

1. Procédé pour la fabrication de particules de carbone poreuses (50) avec une structure enveloppante du noyau, comprenant les étapes suivantes :
a. (a) préparation d'un matériau modèle contenant des pores (20) en substance organique,
b. infiltration des pores (26) du matériau modèle avec un premier précurseur pour le carbone d'une première sorte,
c. carbonisation du premier précurseur, de sorte qu'il se forme dans les pores (26) un premier dépôt en carbone de la première sorte avec une première porosité,
d. infiltration des pores restants après la carbonisation avec un second précurseur pour le carbone d'une seconde sorte,
e. carbonisation du second précurseur, un second dépôt en carbone graphite se formant à partir dans un carbone d'une seconde sorte avec une seconde porosité inférieure à la première porosité,
f. et retrait du matériau modèle (20),
**caractérisé par** des mesures suivantes :
(A) le matériau modèle est préparé sous forme de particules modèles (20) et le premier précurseur sous forme de particules précurseurs de premier sorte à partir de substances fusibles et polymérisables, pour l'infiltration conformément à l'étape de procédé (b), un mélange de particule contenant les particules modèles (20) et les particules précurseurs de la première sorte étant fondues, et la fusion du premier précurseur pénétrant dans les pores (26) des particules modèles et se mettant à mousser avant ou pendant la carbonisation conformément à l'étape de procédé (c) par polycondensation pour obtenir une mousse de carbone (31) contenant des pores, de sorte qu'on obtient un produit intermédiaire où des pores (26) du matériau modèle (20) sont remplis au moins partiellement avec une mousse de carbone (31, et
(B) le produit intermédiaire est broyé en particules de produit intermédiaire et le second précurseur pour le carbone de la seconde sorte est préparé sous forme de particules précurseurs à partir de matériau fusible, pour l'infiltration selon l'étape de procédé (d), un mélange de particules contenant des particules de produit intermédiaire et des particules précurseurs de seconde sorte étant fondues, et la fusion du second précurseur pénétrant dans des pores de la mousse de carbone et fermant au moins partiellement après la carbonisation selon l'étape de procédé (e) comme une enveloppe (41) en carbone graphite, la structure enveloppante centrale.

2. Procédé selon la revendication 1, **caractérisé en ce que** pour l'infiltration selon l'étape de procédé (d), la quantité de carbone de la seconde sorte est réglée faible de sorte que les pores de carbone (31) sont remplis en moyenne au maximum à 30 %, de préférence au maximum 10 %.

3. Procédé selon la revendication 1 ou 2, **caractérisé en ce que** l'enveloppe (31) présente une épaisseur moyenne de maximum 5 µm.

4. Procédé selon l'une des revendications précédentes, **caractérisé en ce que** lors du broyage selon la mesure (B), il est produit des particules de produit intermédiaire avec une taille moyenne de particules entre 5 et 100 µm, de préférence entre 25 et 75 µm.

5. Procédé selon l'une des revendications précédentes, **caractérisé en ce qu'**un carbone est utilisé comme premier précurseur qui scinde au moins 30 % de préférence au moins 50 % de sa masse initiale en gaz.

6. Procédé selon l'une des revendications précédentes, **caractérisé en ce que** le noyau (31 ; 54, 55) présente une surface spécifique selon la mesure BET entre 400 et 600 m²/g et l'enveloppe (41) présente une surface spécifique selon la mesure BET inférieure à 50 m²/g.

7. Procédé selon l'une des revendications précédentes, **caractérisé en ce que** le coeur (31 ; 54, 55) contient des macropores compris entre 250 et 10.000 nm qui prennent un volume spécifique d'au moins 1,0 cm³/g, de préférence au moins 2 cm³/g.

8. Procédé selon l'une des revendications précédentes, **caractérisé en ce que** dans l'enveloppe (41) des pores de taille entre 250 nm et 10 000 nm prennent un volume spécifique non supérieure à 0,8 cm³/g, de préférence non supérieure à 0,5 cm³/g.

9. Procédé selon l'une des revendications précédentes, **caractérisé en ce que** pour l'infiltration selon l'étape de procédé (d), un second précurseur pour le carbone graphite est utilisé en particulier du plomb.

10. Particules de carbone poreuses avec une structure enveloppante du noyau, présentant un noyau (31 ; 54, 55) composé d'une première sorte de carbone avec une première porosité et d'une enveloppe (41) entourant le noyau (31 ; 54, 55) composée d'une seconde sorte de carbone en carbone graphite avec une seconde porosité, qui est inférieure à la première porosité, **caractérisées en ce que** la première sorte de carbone forme une mousse de carbone (31) et **en ce qu'**une part de volume de la mousse de carbone (31) est remplie au maximum de 30% d'un carbone graphite constituant l'enveloppe (41) de la structure enveloppante du noyau et **en ce qu'**il contient des pores modèles (54 ; 55) et des pores de mousse de carbone, les pores de mousse de carbone ayant une taille moyenne de pore comprise entre 250 nm et 10 nm et prennent un volume de pore moyen qui est supérieur d'au moins un facteur 3 au volume des pores modèles (54 ; 55).

11. Particules de carbone selon la revendication 10, **caractérisées en ce qu'**une part de volume de la mousse de carbone (21) est remplie au maximum de 10 % de carbone graphite.

12. Particules de carbone selon la revendication 10 ou 11, **caractérisées en ce que** l'enveloppe (41) présente une épaisseur moyenne de maximal 5 µm.

13. Particules de carbone selon l'une des revendications 10 à 12, **caractérisées en ce que** le noyau (31; 54, 55) présente une surface spécifique selon BET entre 400 et 600 m²/g et l'enveloppe (41) présentant une surface spécifique selon BET inférieur à 50 m²/g, le coeur (31; 54, 55) contenant des macropores compris entre 250 et 10.000 nm qui prennent un volume spécifique d'au moins 1,0 cm³/g, de préférence au moins 2 cm³/g et **en ce que** dans l'enveloppe (41), des pores de taille comprise entre 20 et 250 nm prennent un volume spécifique de maximum 0,8 cm³/g, de préférence maximal 0,5 cm³/g.

14. Particules de carbone selon l'une des revendications 10 à 13, **caractérisées en ce qu'**elles présentent une morphologie en forme de flocons ou de paillettes et une épaisseur moyenne comprise entre 5 et 100 µm, de préférence entre 25 et 75 µm.
